# EUROPÄISCHE PATENTSCHRIFT

(11) **EP 1 238 250 B1**
(45) Veröffentlichungstag und Bekanntmachung des Hinweises auf die Patenterteilung: **17.11.2004**
(21) Anmeldenummer: 00945579.1
(22) Anmeldetag: 29.05.2000
(51) Int. Cl.: G10L 15/22

(54) **SPRACHERKENNUNGSVERFAHREN UND -EINRICHTUNG**
VOICE RECOGNITION METHOD AND DEVICE
PROCEDE ET DISPOSITIF DE RECONNAISSANCE VOCALE

(30) Priorität: 10.06.1999 DE 19926468
(43) Veröffentlichungstag der Anmeldung: 11.09.2002
(73) Patentinhaber: Infineon Technologies AG, 81669 München (DE)
(72) Erfinder: SCHNEIDER, Peter, D-80333 München (DE)
(74) Vertreter: Graf Lambsdorff, Matthias, Dr.
(86) Internationale Anmeldenummer: PCT/DE2000/001734
(87) Internationale Veröffentlichungsnummer: WO 2000/077771

(56) Entgegenhaltungen:
- DE-A- 19 717 601
- US-A- 5 638 425
- US-A- 5 752 230
- KASPAR B ET AL: "SPRACHERKENNUNG FUER GROSSES VOKABULAR DURCH BUCHSTABIERREN" ITG FACHBERICHTE,DE,VDE VERLAG, BERLIN, Nr. 94, 28. April 1986 (1986-04-28), Seiten 31-36, XP000199294 ISSN: 0341-0196
- MARX M ET AL: "Putting people first: specifying proper names in speech interfaces" SYMPOSIUM ON USER INTERFACE SOFTWARE AND TECHNOLOGY,MARINA DEL REY,CA,USA, 2. November 1994 (1994-11-02), Seiten 29-37, XP002147883

## Beschreibung

Die Erfindung betrifft ein Verfahren und eine Einrichtung zur Spracherkennung eines Wortes.

In vielen Bereichen der Technik finden Spracherkennungssysteme zunehmende Verbreitung.

Bei Diktiersystemen werden Spracherkennungstechniken für die automatische Erstellung von geschriebenem Text eingesetzt. Derartige Diktiersysteme beruhen auf der Erkennung einzelner Wörter oder Silben. Neben der Wort- oder Silbenerkennung weisen sie häufig einen Buchstabiermodus auf, der den Benutzer bei Nichterkennung eines Wortes dazu auffordert, das Wort Buchstabe für Buchstabe auszusprechen.

Andere bekannte Spracherkennungsanwendungen basieren a-priori auf einer buchstabenweisen Eingabe eines Wortes. Derartige Systeme werden als Buchstabiererkenner bezeichnet. Buchstabiererkenner werden beispielsweise in Navigationssystemen für Kraftfahrzeuge mit Spracheingabe von Zielinformation eingesetzt. Das Navigationssystem muß eine sehr große Anzahl von teilweise ähnlich klingenden Wörtern (Städtenamen, Straßennamen, Hotel- und Gaststättennamen, usw.) unterscheiden können, was durch eine buchstabenweise Eingabe des Wortes mit hinreichender Sicherheit gewährleistet werden kann. Nachteilig ist jedoch, daß für das Buchstabieren eine relativ hohe Konzentration erforderlich ist, die beim Bewegen eines Kraftfahrzeugs nicht immer aufgebracht werden kann.

Eine weitere bekannte Spracherkennungsanwendung ist in der Patentschrift US-A-5638425 offenbart, in der eine buchstabenweise Eingabe eines Wortes erfolgt, falls eine vorherige kontinuierliche Spracherkennung eine niedrige Erkennungswahrscheinlichkeit des Wortes ergibt.

Der Erfindung liegt die Aufgabe zugrunde, ein Verfahren und eine Einrichtung zur Spracherkennung eines Wortes anzugeben, das bzw. die im Falle einer nicht eindeutigen Erkennung eines Wortes in einem Wort-Erkennungsmodus einen für einen Benutzer bequemen Ablauf zum Auffinden des gesuchten Wortes durchführt.

Zur Lösung der Aufgabe sind die Merkmale der Ansprüche 1 und 8 vorgesehen.

Die Erfindung beruht auf der Erkenntnis, daß es in der Regel nicht erforderlich ist, den Benutzer das im Wort-Erkennungsmodus nicht eindeutig erkannte Wort im Buchstabier-Erkennungsmodus von Anfang an buchstabieren zu lassen. Vielmehr reicht es aus, die begrenzte Anzahl der in der Vorauswahl enthaltenen Wörter anhand von geeignet gewählten Entscheidungsbuchstaben unterscheidbar zu machen und dann das gesuchte Wort durch gezieltes Abfragen des dem gesuchten Wort zugeordneten Entscheidungsbuchstabens im Buchstabier-Erkennungsmodus zu ermitteln.

Vorzugsweise werden bei der Abfrage des Entscheidungsbuchstabens die zuvor bezüglich der Wörter der Vorauswahl bestimmten Entscheidungsbuchstaben dem Benutzer von dem Spracherkennungssystem vorgeschlagen, wodurch die Interaktivität des Systems erhöht wird.

Obgleich die Abfrage grundsätzlich beispielsweise auch optisch erfolgen kann, ist es bei vielen Anwendungen zweckmäßig, eine akustische Abfrage vorzusehen.

In der Praxis kann es vorkommen, daß aufgrund von plötzlich auftretenden Umgebungsgeräuschen oder einer zunächst undeutlichen Aussprache des Benutzers eine Wiederholung des gesprochenen Wortes zweckmäßig erscheint. Eine vorteilhafte Ausgestaltung des erfindungsgemäßen Verfahrens kennzeichnet sich daher dadurch, daß der Benutzer zur Wiederholung des gesprochenen Wortes aufgefordert wird, sofern die Anzahl der in der Vorauswahl enthaltenen Wörter einen vorbestimmten Grenzwert überschreitet. Bei der Wiederholung des Wortes können weniger Störungen durch Umgebungsgeräusche vorliegen und der Benutzer bemüht sich erfahrungsgemäß auch um eine deutlichere Aussprache, so daß im Ergebnis zumeist eine für die folgenden Abfrage- und Buchstabiererkennungsschritte günstigere Vorauswahl als beim ersten Versuch zur Verfügung steht.

Bei dem Buchstabier-Erkennungsmodus kann es sich um einen Alphabetwort-Erkennungsmodus oder einen Buchstaben-Erkennungsmodus handeln. Im ersten Fall kann der Bedienungskomfort in vorteilhafter Weise dadurch erhöht werden, daß mehrere unterschiedliche Alphabetwörter (z.B. "Anton", "Alpha", "Alfred" für den Buchstaben a) einem einzelnen Buchstaben zugeordnet sind. Der Benutzer hat dann mehrere Möglichkeiten, einen Buchstaben im Alphabetwort-Erkennungsmodus zu benennen.

Mit besonderem Vorteil kommt die erfindungsgemäße Einrichtung in einem Navigationssystem für ein Fortbewegungsmittel, insbesondere Kraftfahrzeug (Kfz) zum Einsatz, da aufgrund der einfachen Eingabeprozedur von Zielinformation in das System die Aufmerksamkeit des Fahrers nur in sehr geringem Maße vom Straßenverkehr abgelenkt wird.

Weitere vorteilhafte Ausgestaltungen der Erfindung sind in den Unteransprüchen angegeben.

Die Erfindung wird im folgenden anhand eines Ausführungsbeispiels unter Bezugnahme auf die Zeichnung erläutert; in dieser zeigt:
- Fig. 1: ein Blockschaltbild einer erfindungsgemäßen Einrichtung;
- Fig. 2: ein Blockdiagramm zur beispielhaften Erläuterung des Ablaufs eines erfindungsgemäßen Verfahrens; und
- Fig. 3: eine tabellarische Darstellung zur Erläuterung des Wort-Erkennungsmodus und der beiden Buchstabier-Erkennungsmoden.

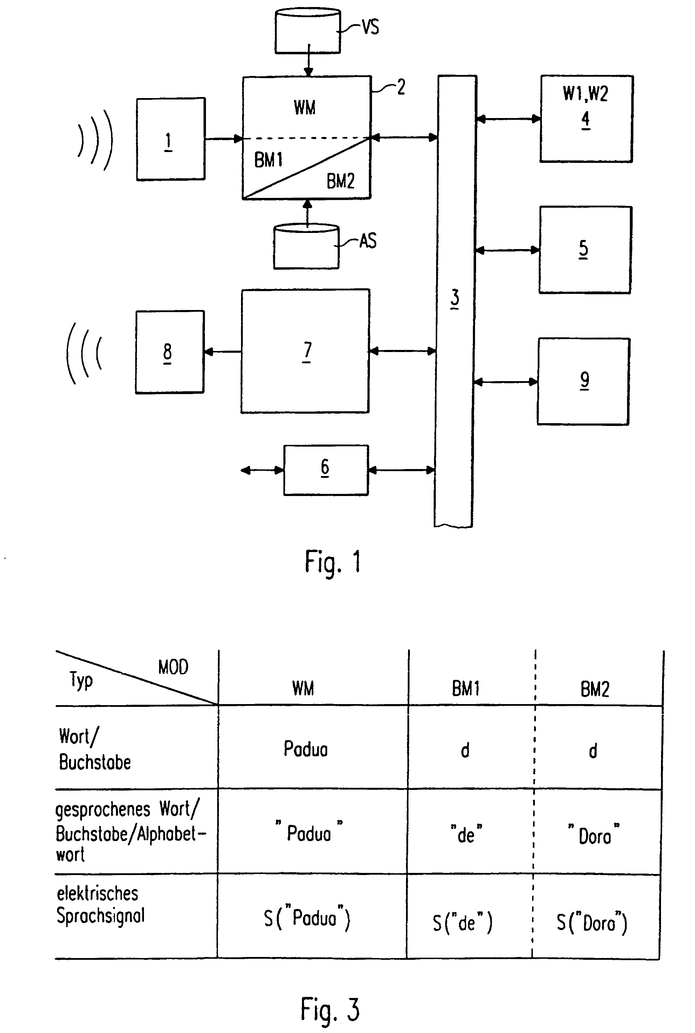

Fig. 1 zeigt in Form eines Beispiels ein Blockschaltbild einer Einrichtung zur Durchführung des erfindungsgemäßen Verfahrens. Einer Mikrophon/Verstärkeranordnung 1 ist ein Spracherkenner 2 nachgeschaltet, der sowohl in einem Wort-Erkennungsmodus (WM) als auch in einem Buchstabier-Erkennungsmodus (BM1 oder BM2) betrieben werden kann. Ein Ausgang des Spracherkenners 2 steht mit einem Daten- und Steuerbus 3 in bidirektionaler Verbindung. An den Daten- und Steuerbus 3 sind ferner ein Wortspeicher 4, ein Analysator/Entscheider 5, eine Schnittstelle 6 und ein Sprachgenerator 7 angeschlossen. Ein Ausgang des Sprachgenerators 7 steht mit einer Verstärker/Lautsprecheranordnung 8 in Verbindung. Ein Microcontroller 9 ist ebenfalls mit dem Daten- und Steuerbus 3 verbunden und dient zur Ablaufsteuerung des gesamten Systems.

Der Spracherkenner 2 hat Zugriff auf einen Vokabularspeicher VS, in dem die zu erkennenden Wörter sowie deren zugeordnete Klangbilder in Form von Referenz-Sprachsignalen abgelegt sind. Ferner greift der Spracherkenner 2 auf einen Alphabetspeicher AS zu, in dem die Buchstaben des Alphabets sowie deren zugeordnete Klangbilder (in Form eines Wortalphabets und/oder in Form von gesprochenen Buchstaben) ebenfalls als Referenz-Sprachsignale abgelegt sind. In beiden Fällen können die Klangbilder vom Benutzer trainierbar sein, wodurch eine benutzerangepaßte Spracherkennung realisiert wird. Der Vokabularspeicher VS kann z.B. eine wechselbare CD-ROM sein. Beide Speicher VS, AS können auch über den Daten- und Steuerbus 3 mit dem Spracherkenner 2 in Verbindung stehen.

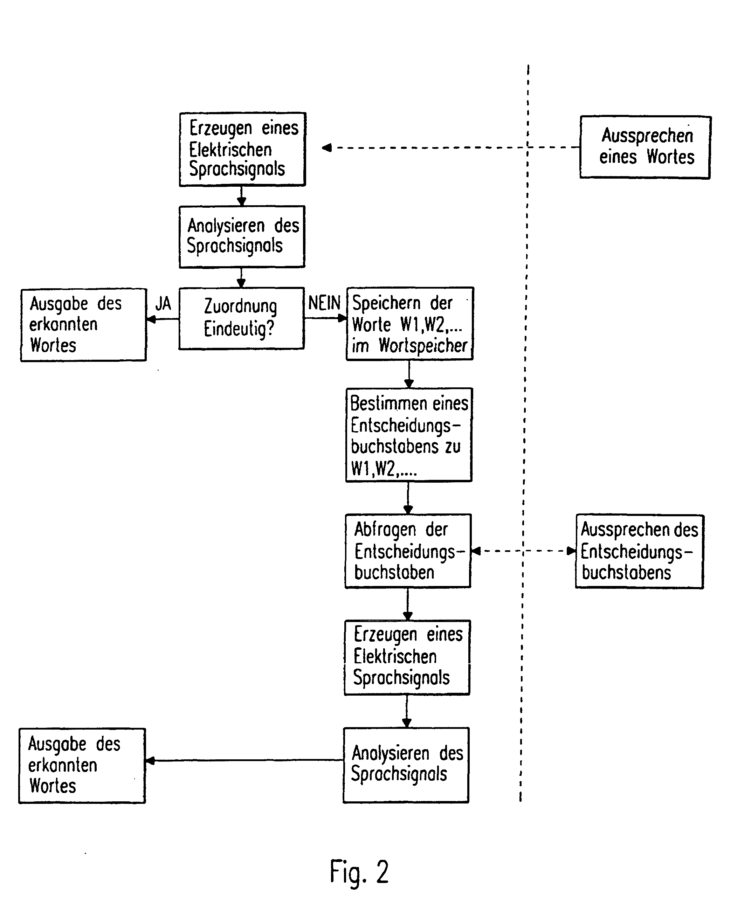

Der Ablauf der erfindungsgemäßen interaktiven Spracherkennung wird in beispielhafter Weise anhand der Fig. 2 und 3 erläutert.

Zunächst befindet sich der Spracherkenner 2 im Wort-Erkennungsmodus WM. Der Benutzer spricht ein zu erkennendes Wort, beispielsweise "Padua" für die italienische Stadt Padua.

Basierend auf dem gesprochenen Wort "Padua" wird mittels der Mikrophon/Verstärkeranordnung 1 ein elektrisches Sprachsignal S("Padua") erzeugt.

Das elektrische Sprachsignal S("Padua") wird nachfolgend im Spracherkenner 2 zur Erkennung des dem Sprachsignal zugrundeliegenden Wortes analysiert. Zur Analyse des elektrischen Sprachsignals S("Padua") kann ein Korrelator verwendet werden, der das elektrische Spachsignal S("Padua") mit dem im Vokabularspeicher VS abgespeicherte Referenz-Sprachsignalen (Klangbildern) vergleicht.

Als erkanntes Wort wird dasjenige Wort W1 aus dem Vokabularspeicher VS bestimmt, dessen Referenz-Sprachsignal die größte Korrelation mit dem erhaltenen, elektrischen Sprachsignal S("Padua") aufweist. Ferner wird ermittelt, mit welcher Sicherheit bzw. Wahrscheinlichkeit die Erkennung korrekt ist. Letzteres kann beispielsweise durch die Berechnung einer Zuverlässigkeitsinformation oder Vertrauenszahl P(W1) erfolgen, welche ein Maß für die Richtigkeit der Erkennung (d.h. Padua = W1) darstellt.

Die Vertrauenszahl P(W1) kann in vielfältiger Weise erzeugt werden. Sie kann beispielsweise in Abhängigkeit von dem Absolutwert der Korrelation des elektrischen Sprachsignals S("Padua") mit dem Referenz-Sprachsignal des erkannten Wortes W1 und/oder von einem Abstand zwischen dem maximalen Korrelationswert (bzgl. des erkannten Wortes W1) und dem nächstkleineren Korrelationswert (bzgl. des nächstähnlich klingenden Wortes W2 aus dem Vokabular) gebildet werden. Während ersteres ein Maß für die absolute "Klangübereinstimmung" darstellt, ist letzteres ein Maß für die "Verwechslungsgefahr" zwischen W1 und W2.

Bei hoher absoluter "Klangübereinstimmung" und geringer "Verwechslungsgefahr" (es können auch noch weitere Parameter hinzugezogen werden) kann mit hoher Wahrscheinlichkeit von einer korrekten Worterkennung ausgegangen werden. In diesem Fall nimmt das System an, daß das gesprochene Wort richtig erkannt wurde und gibt das erkannte Wort W1 als Ergebnis aus. Dem Benutzer wird auf akustischem Wege, z.B. über den Sprachgenerator 7 und die Verstärker/Lautsprecheranordnung 8 oder auf optischem Wege über ein Display die Möglichkeit gegeben, das Erkennungsergebnis (W1) zu kontrollieren und gegebenenfalls dem System als fehlerhafte Erkennung anzuzeigen.

Nicht selten wird jedoch der Fall auftreten, daß zwei oder mehrere Worte W1, W2, ... des Vokabulars gemäß der vorstehend beschriebenen Analyse als Erkennungsergebnis in Frage kommen, d.h. nicht mit hinreichender Sicherheit eine eindeutige Zuordnung im Korrelationsschritt erreicht wird.

In diesem Fall werden die gefundenen Worte W1, W2, ... unter Steuerung des Mikrocontrollers 9 in dem Wortspeicher 4 als Vorauswahl abgespeichert. In dem Wortspeicher 4 können auch die zugehörigen Zuverlässigkeitszahlen P(W1), P(W2), ... gespeichert werden.

In einem nächsten Schritt wird zu jedem gefundenen Wort W1, W2, ... ein in dem entsprechenden Wort enthaltener Entscheidungsbuchstabe bestimmt. Die Bestimmung der Entscheidungsbuchstaben erfolgt durch einen Vergleich der Wörter W1, W2, ... im Analysator/Entscheider 5.

Beispielsweise sei W1 das gesuchte Wort Padua und W2 das ähnlich klingende Wort Pavia. Die beiden Worte W1, W2 sind in den ersten beiden Buchstaben sowie im letzten Buchstaben identisch, können jedoch anhand ihrer dritten oder vierten Buchstaben auseinandergehalten werden. Mithin wird Padua der Entscheidungsbuchstabe d (oder auch u) zugeordnet und Pavia wird der Entscheidungsbuchstabe v (oder auch i) zugeordnet. Sofern - wie im vorliegenden Beispiel - mehrere Möglichkeiten für die Bestimmung eines Entscheidungsbuchstabens bestehen, kann vorgesehen sein, daß Entscheidungsbuchstaben ausgewählt werden, die einen möglichst großen klanglichen Abstand zueinander haben.

Nachfolgend wird der Spracherkenner 2 in einen Buchstabiermodus (BM1 oder BM2) umgeschaltet und es erfolgt eine Abfrage der Entscheidungsbuchstaben zu jedem gefundenen Wort W1, W2.

Die Abfrage kann auf akustischem Wege über den Sprachgenerator 7 und die Verstärker/Lautsprecheranordnung 8 erfolgen. Im Buchstaben-Erkennungsmodus BM1 kann dem Benutzer das Erkennungsproblem beispielsweise über eine Sprachausgabe beschrieben werden, indem ihm als Alternative anboten wird: "Sagen Sie "de" für Padua oder "vau" für Pavia". Entsprechend kann im Wortalphabet-Erkennungsmodus BM2 die Aufforderung lauten: "Sagen Sie "Dora" für Padua oder "Viktor" für Pavia".

Die Aufforderung zur Nennung des richtigen Entscheidungsbuchstabens kann auch auf optischem Wege stattfinden, beispielsweise indem über ein Display eine Liste der gefundenen Wörter W1, W2, ... angezeigt wird und die von dem Analysator/Entscheider 5 bestimmten Entscheidungsbuchstaben durch Aufblinken oder andere optische Maßnahmen für den Benutzer erkennbar gemacht werden.

Im nächsten Schritt beantwortet der Benutzer die Anfrage durch Aussprechen des dem richtigen Wort W1 zugeordneten Entscheidungsbuchstabens, also "de" (im Buchstaben-Erkennungsmodus BM1) oder "Dora" (im Alphabetwort-Erkennungsmodus BM2).

Der gesprochene Buchstaben wird mittels der Mikrophon/Verstärkeranordnung 1 in ein elektrisches Sprachsignal S("de") bzw. S("Dora") umgesetzt. Dieses elektrische Sprachsignal wird nachfolgend im Spracherkenner 2 zur Erkennung des dem Sprachsignal zugrundeliegenden Buchstabens d mittels eines Korrelators analysiert. Dabei werden im Alphabetspeicher AS abgelegte Referenz-Sprachsignale (Klangbilder) der entsprechenden gesprochenen Buchstaben oder Alphabetwörter mit dem elektrischen Sprachsignal S("de") bzw. S("Dora") verglichen.

In einem optionalen, abschließenden Schritt kann vorgesehen sein, daß das daraufhin identifizierte Wort W1 = Padua dem Benutzer zur Bestätigung über den Sprachgenerator 7 und die Verstärker/Lautsprecheranordnung 8 vorgesprochen oder auf dem Display angezeigt wird. Bei einer Bestätigung durch den Benutzer wird das Wort W1 dem System (z.B. Kfz-Navigationssystem oder Computer) über die Schnittstelle 6 mitgeteilt, so daß das System daraufhin von dem erkannten Wort abhängige Steuermaßnahmen einleiten kann.

## Patentansprüche

1. Verfahren zur interaktiven Spracherkennung eines Wortes durch ein Spracherkennungssystem, mit den Schritten:
- in einem Wort-Erkennungsmodus (WM)
-- Umsetzen eines gesprochenen Worts ("Padua") in ein elektrisches Wort-Sprachsignal (S("Padua")) und
-- Analysieren des Wort-Sprachsignals (S("Padua")) zur Erkennung des Wortes (Padua) aus einem Vokabular (VS) vorgegebener Wörter;
- sofern eine eindeutige Zuordnung des Wort-Sprachsignals (S("Padua")) zu einem Wort des Vokabulars (VS) nicht getroffen werden kann, Zusammenstellen einer Vorauswahl von mehreren Wörtern (W1, W2) des Vokabulars, unter denen sich das gesprochenen Wort ("Padua") mit hinreichender Sicherheit befindet;
- Bestimmen mindestens eines Entscheidungsbuchstabens zu jedem Wort (W1, W2) der Vorauswahl, welcher ein Wort von den anderen Wörtern der Vorauswahl unterscheidbar macht;
- in einem Buchstabier-Erkennungsmodus (BM1, BM2)
-- Abfragen der Entscheidungsbuchstaben zu den Wörtern der Vorauswahl;
-- Umsetzen einer Buchstabier-Spracheingabe ("de", "Dora") in ein zugeordnetes elektrisches Buchstabier-Sprachsignal (S("de"), S("Dora")), und
-- Analysieren des Buchstabier-Sprachsignals (S("de"), S("Dora")) zur Erkennung des Entscheidungsbuchstabens (d).

2. Verfahren nach Anspruch 1,
**dadurch gekennzeichnet,**
**daß** bei der Abfrage die zuvor bestimmten Entscheidungsbuchstaben dem Benutzer von dem Spracherkennungssystem vorgeschlagen werden.

3. Verfahren nach Anspruch 1 oder 2,
**dadurch gekennzeichnet,**
**daß** die Abfrage akustisch erfolgt.

4. Verfahren nach einem der vorhergehenden Ansprüche,
**dadurch gekennzeichnet,**
**daß** der Benutzer zur Wiederholung des gesprochenen Wortes ("Padua") aufgefordert wird, sofern die Anzahl der in der Vorauswahl enthaltenen Wörter (W1, W2) einen vorbestimmten Grenzwert überschreitet.

5. Verfahren nach einem der vorhergehenden Ansprüche,
**dadurch gekennzeichnet,**
**daß** es sich bei dem Buchstabier-Erkennungsmodus um einen Alphabetwort-Erkennungsmodus (BM2) handelt.

6. Verfahren nach Anspruch 5,
**dadurch gekennzeichnet,**
**daß** die Alphabetwörter benutzerdefinierbar sind und/oder daß für einen Buchstaben mehrere Alphabetwörter verwendet werden können.

7. Verfahren nach einem der Ansprüche 1 bis 4
**dadurch gekennzeichnet,**
**daß** es sich bei dem Buchstabier-Erkennungsmodus um einen Buchstaben-Erkennungsmodus (BM1) handelt.

8. Einrichtung zur Spracherkennung eines Wortes,
- mit einem Worterkenner (2, WM), der ein gesprochenes Wort ("Padua") in ein elektrisches Wort-Sprachsignal (S("Padua")) umsetzt und das Wort-Sprachsignal (S("Padua")) zur Erkennung des Wortes aus einem Vokabular vorgegebener Wörter (W1, W2) analysiert,
- mit einer Auswahllogik, die, sofern eine eindeutige Zuordnung des Wort-Sprachsignals (S("Padua")) zu einem Wort des Vokabulars nicht getroffen werden kann, eine Vorauswahl von mehreren Wörtern (W1, W2) des Vokabulars, unter denen sich das gesprochene Wort ("Padua") mit hinreichender Sicherheit befindet, zusammenstellt,
- mit einer Logik (5) zum Bestimmen mindestens eines Entscheidungsbuchstabens zu jedem Wort (W1, W2) des Vokabulars, welcher ein Wort von den anderen Wörtern der Vorauswahl unterscheidbar macht,
- mit einer Ausgabeeinheit (7, 8), über die die Entscheidungsbuchstaben zu den Wörtern (W1, W2) der Vorauswahl abgefragt werden, und
- mit einem Buchstabiererkenner (2, BM1, BM2), der eine Buchstabier-Spracheingabe ("de", "Dora") in ein zugehöriges elektrisches Buchstabier-Sprachsignal (S("de"), S("Dora")) umsetzt und zur Erkennung des Entscheidungsbuchstabens analysiert.

9. Navigationssystem für ein Fortbewegungsmittel, enthaltend eine Einrichtung nach Anspruch 8 zur Eingabe von Zielortinformation.

## Claims

1. Method for the interactive voice recognition of a word by a voice recognition system, with the following features:
- in a word recognition mode (WM)
-- conversion of a spoken word ("Padua") into an electrical word voice signal (S("Padua")) and
-- analysis of the word voice signal (S("Padua")) for the recognition of the word (Padua) from a vocabulary (VS) of predetermined words;
- if a definite assignment of the word voice signal (S("Padua")) to a word of the vocabulary (VS) cannot be made, compilation of a preselection of a number of words (W1, W2) of the vocabulary among which the spoken word ("Padua") is located with sufficient certainty;
- determination for each word (W1, W2) of the preselection of at least one decisive letter which makes a word distinguishable from the other words of the preselection;
- in a spelling recognition mode (BM1, BM2)
-- inquiry of the decisive letters for the words of the preselection;
-- conversion of a spelling voice input ("dee", "Dora") into an assigned electrical spelling voice signal (S("dee"), S("Dora")), and
-- analysis of the spelling voice signal (S("dee"), S("Dora")) for the recognition of the decisive letter (d).

2. Method according to Claim 1, **characterized in that** in the inquiry the previously determined decisive letters are suggested to the user by the voice recognition system.

3. Method according to Claim 1 or 2, **characterized in that** the inquiry takes place acoustically.

4. Method according to one of the preceding claims, **characterized in that** the user is prompted to repeat the spoken word ("Padua") if the number of words (W1, W2) contained in the preselection exceeds a predetermined limit value.

5. Method according to one of the preceding claims, **characterized in that** the spelling recognition mode is an alphabet-word recognition mode (BM2).

6. Method according to Claim 5, **characterized in that** the alphabet words ("Anton", "Bertha", "Caesar") are user-definable and/or **in that** a number of alphabet words can be used for one letter.

7. Method according to one of Claims 1 to 4, **characterized in that** the spelling recognition mode is a letter recognition mode (BM1).

8. Device for the voice recognition of a word,
- with a word recognition unit (2, WM), which converts a spoken word ("Padua") into an electrical word voice signal (S("Padua")) and analyses the word voice signal (S("Padua")) for the recognition of the word from a vocabulary of predetermined words (W1, W2),
- with a selection logic, which, if a definite assignment of the word voice signal (S("Padua")) to a word of the vocabulary cannot be made, compiles a preselection of a number of words (W1, W2) of the vocabulary among which the spoken word ("Padua") is located with sufficient certainty,
- with a logic (5) for determining for each word (W1, W2) of the vocabulary at least one decisive letter which makes a word distinguishable from the other words of the preselection,
- with an output unit (7, 8), by means of which the decisive letters for the words (W1, W2) of the preselection are inquired, and
- with a spelling recognition unit (2, BM1, BM2), which converts a spelling voice input ("dee", "Dora") into an associated electrical spelling voice signal (S("dee"), S("Dora")) and analyses it for the recognition of the decisive letter.

9. Navigation system for a means of locomotion, containing a device according to Claim 8 for the input of destination information.

## Revendications

1. Procédé pour la reconnaissance interactive vocale d'un mot par un système de reconnaissance de la parole, comportant les étapes :
- dans un mode (WM) de reconnaissance de mots,
-- convertir un mot parlé (« Padua ») en un signal (S (« Padua »)) vocal de mot électrique et
-- analyser le signal (S (« Padua »)) vocal de mot pour la reconnaissance du mot ( Padua ) dans un vocabulaire (VS) de mots donnés à l'avance
- dans la mesure où une association univoque du signal (S (« Padua »)) vocal de mot à un mot du vocabulaire (VS) ne peut pas être trouvée, assembler une sélection préalable de plusieurs mots (W1, W2) du vocabulaire, sous lesquels le mot (« Padua ») parlé se trouve avec une sécurité suffisante ;
- déterminer au moins une lettre de décision pour chaque mot (W1, W2) de la sélection préalable, qui rend discernable un mot des autres mots de la sélection préalable ;
- dans un mode (BM1, BM2) de reconnaissance d'épellations,
-- interroger les lettres de décision par rapport aux mots de la sélection préalable;
-- convertir une entrée (« de », « Dora ») vocale d'épellation en un signal (S (« de »,) ,S (« Dora »)) vocal d'épellation électrique associé et
-- analyser le signal (S (« de »), S (« Dora »)) vocal d'épellation pour reconnaître la lettre (d) de décision.

2. Procédé suivant la revendication 1,
**caractérisé en ce que**, lors de l'interrogation, les lettres de décision déterminées auparavant sont proposées à l'utilisateur par le système de reconnaissance vocale.

3. Procédé suivant la revendication 1 ou 2,
**caractérisé en ce que** l'interrogation est effectuée de manière acoustique.

4. Procédé suivant l'une des revendications précédentes,
**caractérisé en ce que** l'utilisateur est invité à répéter le mot (« Padua ») parlé, dans la mesure où le nombre des mots (W1, W2) contenus dans la sélection préalable est supérieur à une valeur limite déterminée à l'avance.

5. Procédé suivant l'une des revendications précédentes, **caractérisé en ce que** dans le mode de reconnaissance d'épellation, il s'agit d'un mode (BM2) de reconnaissance de mots de l'alphabet.

6. Procédé suivant la revendication 5, **caractérisé en ce que** les mots de l'alphabet peuvent être définis par l'utilisateur et/ou **en ce que** pour une lettre plusieurs mots de l'alphabet peuvent être utilisés.

7. Procédé suivant l'une des revendications 1 à 4,
**caractérisé en ce que** pour le mode de reconnaissance d'épellation il s'agit d'un mode (BM1) de reconnaissance de lettres.

8. Dispositif pour la reconnaissance vocale d'un mot
comportant un dispositif (2, WM) de reconnaissance de mots, qui convertit un mot parlé («Padua ») en un signal (S (« Padua »)) vocal de mot électrique et analyse le signal (S (« Padua »)) vocal de mot pour la reconnaissance du mot à partir d'un vocabulaire de mots (W1, W2) donnés à l'avance,
comportant une logique de sélection qui, dans la mesure où une association univoque du signal (S (« Padua »)) vocal de mot à un mot du vocabulaire ne peut pas être trouvée, assemble une sélection préalable de plusieurs mots (W1, W2) du vocabulaire, sous lesquels se trouve le mot (« Padua ») parlé avec une sécurité suffisante,
comportant une logique (5) pour déterminer au moins une lettre de décision pour chaque mot (W1, W2) du vocabulaire qui rend discernable un mot des autres mots de la sélection préalable,
comportant une unité (7, 8) d'entrée, par laquelle on interroge les lettres de décision par rapport aux mots (W1, W2) de la sélection préalable, et
comportant un dispositif (2, BM1, BM2) de reconnaissance d'épellation, qui convertit une entrée (« de », « Dora ») vocale d'épellation en un signal (S (« de »), S (« Dora »)) vocal d'épellation électrique associé et l'analyse pour la reconnaissance de la lettre de décision.

9. Système de navigation pour un moyen de locomotion contenant un dispositif suivant la revendication 8, pour l'introduction d'informations de lieux de destination.
